# EUROPEAN PATENT APPLICATION

(11) **EP 2 309 727 A1**
(43) Date of publication of application: **13.04.2011**
(21) Application number: 10175290.5
(22) Date of filing: 03.09.2010
(51) Int. Cl.: H04N 5/44, H04N 5/46, H04N 7/20

(54) **Broadcast receiving apparatus and broadcast receiving method**

(30) Priority: 15.09.2009 JP 2009213624
(71) Applicant: Kabushiki Kaisha Toshiba, Tokyo 105-8001 (JP)
(72) Inventor: Takegoshi, Masatoshi, Tokyo 105-8001 (JP)
(74) Representative: Henkel, Feiler & Hänzel

(57) **Abstract**

According to one embodiment, a broadcast receiving apparatus includes a first tuner (11), a second tuner (12), a third tuner (12), a first reader (21), a second reader (22), and a signal processor (32). The first reader is configured to read first card information from a first card. The second reader is configured to read second card information from a second card of a type different from the first card. The signal processor is configured to decrypt a first channel signal selected by the first tuner based on the first card information, and to decrypt a second channel signal and a third channel signal respectively selected by the second tuner and the third tuner based on the second card information.

## Description

Embodiments described herein relate generally to a broadcast signal processing technique which decrypts an encrypted broadcast signal based on information recorded on, e.g., a B-CAS card.

In recent years, a television broadcast receiving apparatus including two tuners has become commercially available. Such a television broadcast receiving apparatus can screen one channel (for viewing) and record another channel or can simultaneously record two channels using the two tuners.

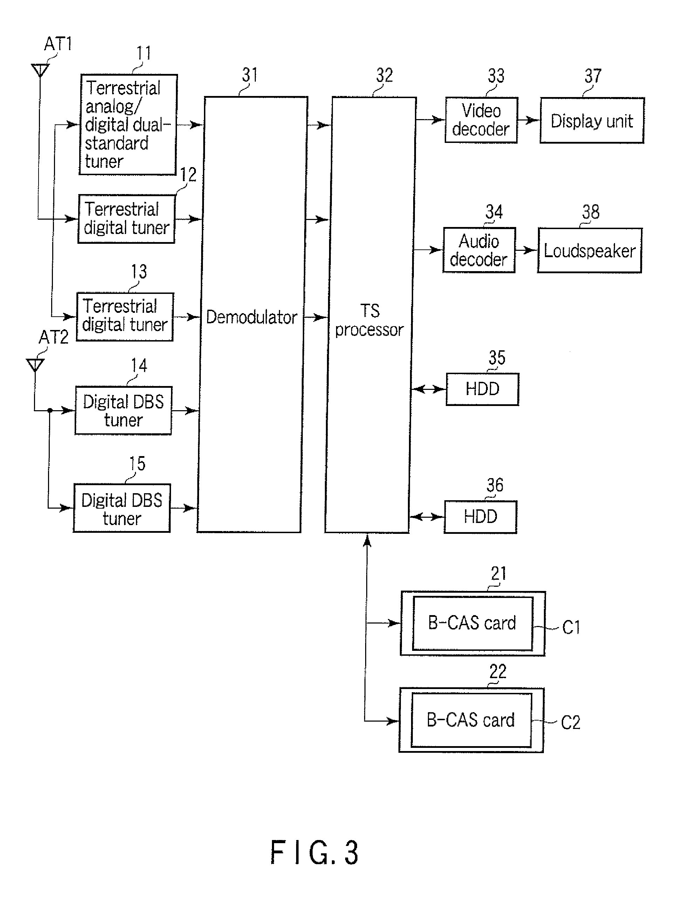

Jpn. Pat. Appln. KOKAI Publication No. 2009-124379 (FIG. 3 etc.) discloses the following television broadcast receiving apparatus. The television broadcast receiving apparatus includes one card slot (card interface), and can decrypt an encrypted channel signal using card information (key information) on one smartcard (B-CAS card) inserted in this card slot.

Currently, it is guaranteed that one smartcard can be used to simultaneously decrypt two channel signals at a maximum.

When the aforementioned television broadcast receiving apparatus simultaneously records, e.g., two channels, it cannot screen another channel (for viewing). That is, when the television broadcast receiving apparatus simultaneously records two channels, it can display only the recording channels. The user can view only recording programs, resulting in poor convenience.

Hence, the television broadcast receiving apparatus includes another identical tuner in addition to the two tuners, and can screen another channel while simultaneously recording two channels. However, when the television broadcast receiving apparatus includes three tuners, the cost of the television broadcast receiving apparatus increases.

Also, one B-CAS card has a constraint that it is used to decrypt only two channel signals at a maximum.

A general architecture that implements the various feature of the embodiments will now be described with reference to the drawings. The drawings and the associated descriptions are provided to illustrate the embodiments and not to limit the scope of the invention.
FIG. 1 is a schematic block diagram showing an example of the arrangement of a broadcast receiving apparatus according to a first embodiment;
FIG. 2 is a table that summarizes examples of processes for screening one program and recording two programs by the broadcast receiving apparatus according to the first embodiment;
FIG. 3 is a schematic block diagram showing an example of the arrangement of a broadcast receiving apparatus according to a second embodiment;
FIG. 4 is a table showing a first example of transitions of video recording/screening states by the broadcast receiving apparatus according to the second embodiment;
FIG. 5 is a table showing a second example of transitions of video recording/screening states by the broadcast receiving apparatus according to the second embodiment;
FIG. 6 is a table showing a third example of transitions of video recording/screening states by the broadcast receiving apparatus according to the second embodiment;
FIG. 7 is a table that summarizes examples of processes for screening two programs and recording two programs by the broadcast receiving apparatus according to the second embodiment;
FIG. 8 is a view showing a display example of a warning message associated with B-CAS cards; and
FIG. 9 is a view showing an example of a display screen during recording/screening processes of programs.

Various embodiments will be described hereinafter with reference to the accompanying drawings.

In general, according to one embodiment, a broadcast receiving apparatus includes a first tuner, a second tuner, a third tuner, a first reader, a second reader, and a signal processor. The first reader is configured to read first card information from a first card. The second reader is configured to read second card information from a second card of a type different from the first card. The signal processor is configured to decrypt a first channel signal selected by the first tuner based on the first card information, and to decrypt a second channel signal and a third channel signal respectively selected by the second tuner and the third tuner based on the second card information.

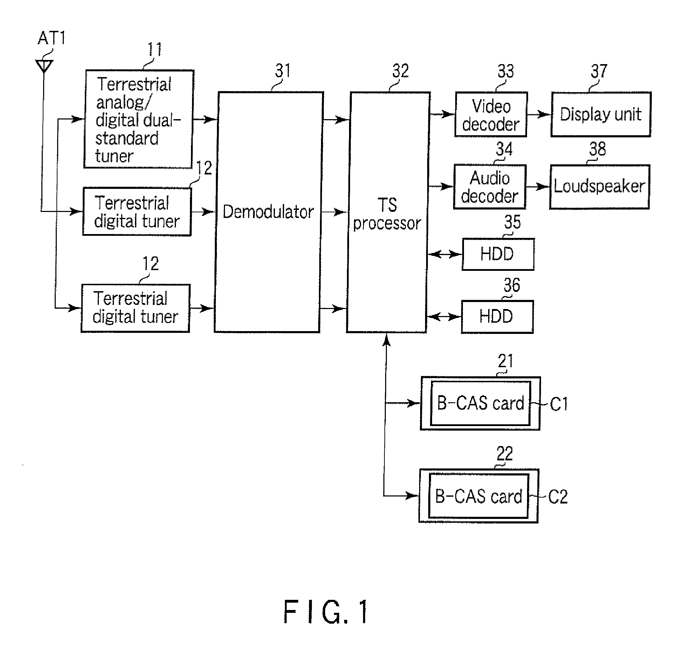

FIG. 1 is a schematic block diagram showing the arrangement of a broadcast receiving apparatus according to a first embodiment. As shown in FIG. 1, the broadcast receiving apparatus includes a terrestrial analog/digital dual-standard tuner 11, terrestrial digital tuner 12, terrestrial digital tuner 13, B-CAS card slot 21, B-CAS card slot 22, demodulator 31 (signal processor), transport stream (TS) processor 32 (signal processor), video decoder 33, audio decoder 34, HDD 35, HDD 36, display unit 37, and loudspeaker 38.

Note that the first embodiment will explain a case in which the broadcast receiving apparatus includes the HDDs 35 and 36. However, these HDDs 35 and 36 are not indispensable components of the broadcast receiving apparatus. For example, the broadcast receiving apparatus may include an interface used to connect the HDDs 35 and 36, and may be connected to the HDDs 35 and 36 via the interface. Also, the first embodiment will explain a case in which the broadcast receiving apparatus includes the display unit 37. However, the display unit 37 is not an indispensable component of the broadcast receiving apparatus. For example, the broadcast receiving apparatus may include an interface used to output a video signal to the display unit 37, and may be connected to the display unit 37 via this interface. Furthermore, the first embodiment will explain a case in which the broadcast receiving apparatus includes the loudspeaker 38. However, the loudspeaker 38 is not an indispensable component of the broadcast receiving apparatus. For example, the broadcast receiving apparatus may include an interface used to output an audio signal to the loudspeaker 38, and may be connected to the loudspeaker 38 via this interface.

A broadcast signal received by an antenna AT1 is input to the terrestrial analog/digital dual-standard tuner 11, and the terrestrial digital tuners 12 and 13. The terrestrial analog/digital dual-standard tuner 11 selects and outputs a signal of a designated channel from the broadcast signal corresponding to a terrestrial analog broadcast, or selects and outputs a signal of a designated channel from the broadcast signal corresponding to a terrestrial digital broadcast. The terrestrial digital tuner 12 selects and outputs a signal of a designated channel from the broadcast signal corresponding to the terrestrial digital broadcast. Likewise, the terrestrial digital tuner 13 also selects and outputs a signal of a designated channel from the broadcast signal corresponding to the terrestrial digital broadcast.

The demodulator 31 can demodulate a first channel signal output from the terrestrial analog/digital dual-standard tuner 11, a second channel signal output from the terrestrial digital tuner 12, and a third channel signal output from the terrestrial digital tuner 13, and can input a first TS signal corresponding to the first channel signal, a second TS signal corresponding to the second channel signal, and a third TS signal corresponding to the third channel signal to the TS processor 32. That is, the demodulator 31 can simultaneously decode three channel signals. Note that the first embodiment will explain a case in which the demodulator 31 simultaneously demodulates three channel signals. However, the demodulator 31 can demodulate only one channel signal, and can simultaneously demodulate two channel signals.

When the first, second, and third TS signals are encrypted (scrambled), B-CAS cards C1 and C2 are used to decrypt (descramble) these encrypted (scrambled) first, second, and third TS signals. Card slot 21 is a card interface (reader) required to communicate with inserted B-CAS card C1 or C2. Likewise, card slot 22 is also a card interface (reader) required to communicate with inserted B-CAS card C1 or C2.

The TS processor 32 demultiplexes a first control signal (ECM) from the first TS signal, and inputs the first control signal to B-CAS card C1 via, e.g., card slot 21 (card interface). For example, the TS processor 32 inputs the first control signal to B-CAS card C1 every 2 seconds. B-CAS card C1 decodes a first encryption key based on the first control signal. The TS processor 32 decrypts the encrypted first TS signal based on this first encryption key (card information).

Also, the TS processor 32 demultiplexes a second control signal (ECM) from the second TS signal, and inputs the second control signal to B-CAS card C2 via, e.g., card slot 22 (card interface). For example, the TS processor 32 inputs the second control signal to B-CAS card C2 every 2 seconds. B-CAS card C2 decodes a second encryption key based on the second control signal. The TS processor 32 decrypts the encrypted second TS signal based on this second encryption key (card information).

Furthermore, the TS processor 32 demultiplexes a third control signal (ECM) from the third TS signal, and inputs the third control signal to B-CAS card C2 via, e.g., card slot 22 (card interface). For example, the TS processor 32 inputs the third control signal to B-CAS card C2 every 2 seconds. B-CAS card C2 decodes a third encryption key based on the third control signal. The TS processor 32 decrypts the encrypted third TS signal based on this third encryption key (card information).

For example, B-CAS card C1 supports simultaneous decryption of two channel signals. Likewise, B-CAS card C2 also supports simultaneous decryption of two channel signals. The first embodiment has explained the case in which B-CAS card C1 is used to decrypt the first TS signal (that to be viewed), and B-CAS card C2 is used to decrypt the second and third TS signals (those to be recorded). However, the invention is not limited to such specific case.

For example, B-CAS card C1 may be used to decrypt the second TS signal, and B-CAS card C2 may be used to decrypt the first and third TS signals. Alternatively, B-CAS card C1 may be used to decrypt the third TS signal, and B-CAS card C2 may be used to decrypt the first and second TS signals. Alternatively, B-CAS card C1 may be used to decrypt the first and second TS signals, and B-CAS card C2 may be used to decrypt the third TS signal. Alternatively, B-CAS card C1 may be used to decrypt the second and third TS signals, and B-CAS card C2 may be used to decrypt the first TS signal. Alternatively, B-CAS card C1 may be used to decrypt the first and third TS signals, and B-CAS card C2 may be used to decrypt the second TS signal.

For example, when the user designates screening of one program (first channel signal) and video recording of two programs (second and third channel signals), the TS processor 32 generates a first video signal and first audio signal from the decrypted first TS signal, outputs the first video signal to the video decoder 33, and outputs the first audio signal to the audio decoder 34. Furthermore, the TS processor 32 outputs the decrypted second TS signal (partial TS signal) and the decrypted third TS signal (partial TS signal) to the HDD 35 or 36.

Then, the video decoder 33 decodes the first video signal, and outputs the decoded first video signal to the display unit 37. The display unit 37 displays a first video picture based on the decoded first video signal. The audio decoder 34 decodes the first audio signal, and outputs the decoded first audio signal to the loudspeaker 38. The loudspeaker 38 outputs a first sound based on the decoded first audio signal. Furthermore, the HDD 35 or 36 records the second TS signal (partial TS signal) and the third TS signal (partial TS signal).

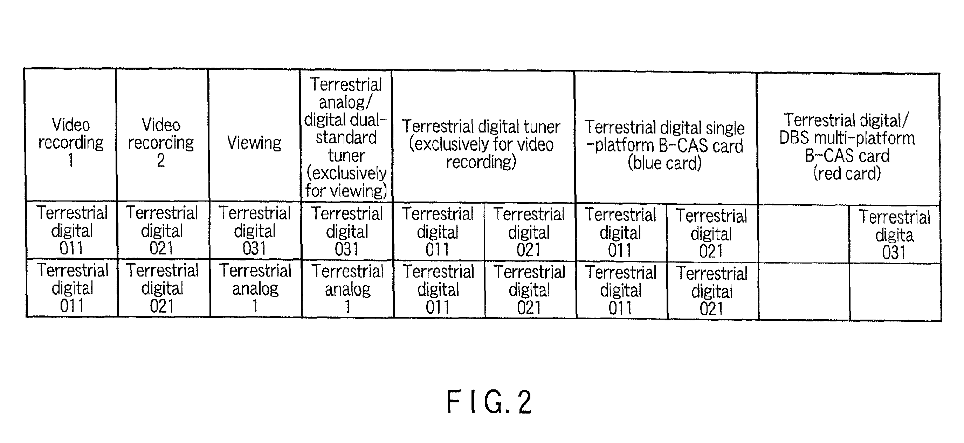

FIG. 2 is a table that summarizes processes for screening one program and recording two programs by the broadcast receiving apparatus according to the first embodiment. A case will be described below wherein, for example, the broadcast receiving apparatus records channel 011 of the terrestrial digital broadcast, records channel 021 of the terrestrial digital broadcast, and screens channel 031 of the terrestrial digital broadcast. In this case, the broadcast receiving apparatus selects a signal of channel 011 using the terrestrial digital tuner 12, selects a signal of channel 021 using the terrestrial digital tuner 13, and selects a signal of channel 031 using the terrestrial analog/digital dual-standard tuner 11. Then, the broadcast receiving apparatus decrypts the signals of channels 011 and 021 using B-CAS card C2, and decrypts the signal of channel 031 using B-CAS card C1.

A case will be described below wherein the broadcast receiving apparatus records channel 011 of the terrestrial digital broadcast, records channel 021 of the terrestrial digital broadcast, and screens channel 1 of the terrestrial analog broadcast. In this case, the broadcast receiving apparatus selects a signal of channel 011 using the terrestrial digital tuner 12, selects a signal of channel 021 using the terrestrial digital tuner 13, and selects a signal of channel 1 using the terrestrial analog/digital dual-standard tuner 11. Then, the broadcast receiving apparatus decrypts the signals of channels 011 and 021 using B-CAS card C2.

As described above, the broadcast receiving apparatus according to the first embodiment can simultaneously decrypt three or more digital broadcast TS signals using the two B-CAS cards, and can simultaneously screen or record three or more digital broadcast programs.

FIG. 3 is a schematic block diagram showing the arrangement of a broadcast receiving apparatus according to a second embodiment. As shown in FIG. 3, the broadcast receiving apparatus further includes digital DBS tuners 14 and 15 in addition to the arrangement of the broadcast receiving apparatus shown in FIG. 1. Note that the digital DBS tuners 14 and 15 may be dual-standard DBS tuners capable of receiving signals from purpose-designed DBS transponders on dedicated direct-broadcast satellites and from transponders repurposed for direct broadcasting on communications satellites.

A broadcast signal received by a DBS antenna AT2 is input to digital DBS tuners 14 and 15. Digital DBS tuner 14 selects and outputs a signal of a designated channel from the broadcast signal corresponding to a digital DBS broadcast. Likewise, digital DBS tuner 15 also selects and outputs a signal of a designated channel from the broadcast signal corresponding to the digital DBS broadcast.

A demodulator 31 can demodulate, for example, three channel signals of a first channel signal output from a terrestrial analog/digital dual-standard tuner 11, a second channel signal output from a terrestrial digital tuner 12, a third channel signal output from a terrestrial digital tuner 13, a fourth channel signal output from digital DBS tuner 14, and a fifth channel signal output from digital DBS tuner 15. Note that the demodulator 31 may be configured to demodulate four or more channel signals. The demodulator 31 can input three TS signals corresponding to the three channel signals to a TS processor 32 by the aforementioned demodulation.

For example, when the aforementioned three TS signals are encrypted, B-CAS cards C1 and C2 are used to decrypt these three encrypted TS signals. The decryption processing using B-CAS cards C1 and C2 is as described above. The first embodiment has not explained detailed roles of B-CAS cards C1 and C2. However, the second embodiment will define the detailed roles of B-CAS cards C1 and C2 as follows.

For example, B-CAS card C1 (red card) is compatible with a terrestrial digital broadcast and the digital DBS broadcast (first and second broadcasts), and supports decryption of two channel signals. In contrast, B-CAS card C2 (blue card) is compatible with the terrestrial digital broadcasting (first broadcast), and supports decryption of two channel signals.

In this manner, B-CAS card C1 is compatible with terrestrial digital broadcasting and digital DBS, while B-CAS card C2 is exclusively used for terrestrial digital broadcasting. Thus, the broadcast receiving apparatus selectively uses B-CAS cards C1 and C2 depending on the situation.

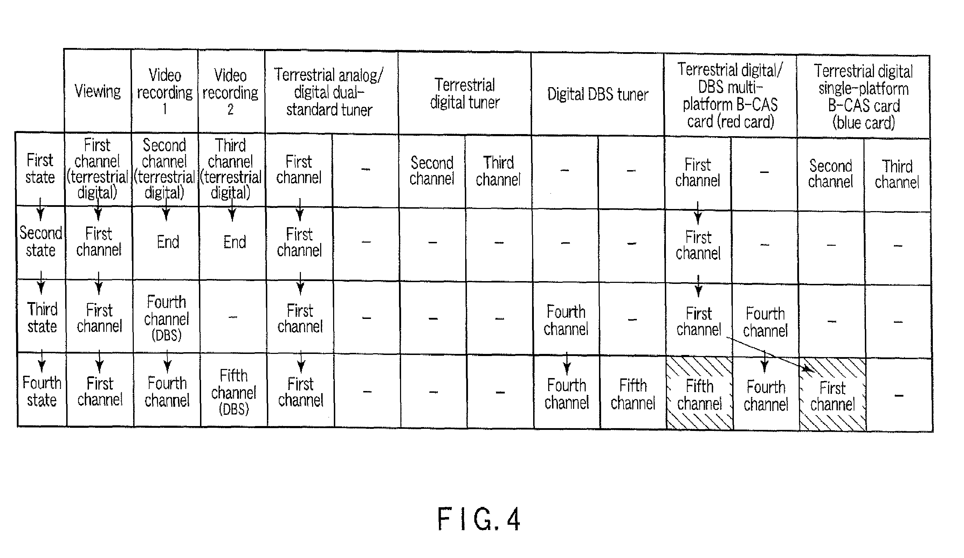

For example, a case will be assumed wherein program screening and video recording states in the broadcast receiving apparatus transit, as shown in FIG. 4. A first state will be assumed first. In this first state, the broadcast receiving apparatus screens a first channel of the terrestrial digital broadcast, while it records second and third channels of the terrestrial digital broadcast. In this first state, for example, the terrestrial analog/digital dual-standard tuner 11 selects a first channel signal of the terrestrial digital broadcast, the terrestrial digital tuner 12 selects a second channel signal of the terrestrial digital broadcast, and the terrestrial digital tuner 13 selects a third channel signal of the terrestrial digital broadcast. The TS processor 32 decrypts a first TS signal corresponding to the first channel signal using a first encryption key obtained from B-CAS card C1, decrypts a second TS signal corresponding to the second channel signal using a second encryption key obtained from B-CAS card C2, and decrypts a third TS signal corresponding to the third channel signal using a third encryption key obtained from B-CAS card C2. Then, the broadcast receiving apparatus can record the decrypted second and third TS signals while screening the decrypted first TS signal.

Subsequently, a case will be assumed wherein the aforementioned first state transits to a second state. In this second state, the broadcast receiving apparatus stops the video recording of the second and third channels of the terrestrial digital broadcast, while continuing the screening of the first channel of the terrestrial digital broadcast. In this second state, for example, the terrestrial analog/digital dual-standard tuner 11 continues selection of the first channel signal of the terrestrial digital broadcast, and the TS processor 32 continues decryption of the first TS signal corresponding to the first channel signal using the first encryption key obtained from B-GAS card C1. On the other hand, the terrestrial digital tuners 12 and 13 can pause their operations, and need not use B-CAS card C2. Then, the broadcast receiving apparatus continues the screening of the decrypted first TS signal.

Then, a case will be assumed wherein the aforementioned second state transits to a third state. In this third state, the broadcast receiving apparatus starts video recording of a fourth channel of the digital DBS broadcast, while continuing the screening of the first channel of the terrestrial digital broadcast. In this third state, for example, the terrestrial analog/digital dual-standard tuner 11 continues selection of the first channel signal of the terrestrial digital broadcast, and digital DBS tuner 14 (or digital DBS tuner 15) selects a fourth channel signal of the digital DBS broadcast. The TS processor 32 continues decryption of the first TS signal corresponding to the first channel signal using the first encryption key obtained from B-CAS card C1, and decrypts a fourth TS signal corresponding to the fourth channel signal using a fourth encryption key also obtained from B-CAS card C1. Note that B-CAS card C2 is not compatible with the digital DBS broadcast, as described above. Thus, the fourth TS signal of the digital DBS broadcast cannot be decrypted using B-CAS card C2. For this reason, B-CAS card C1 is used to decrypt the two channel signals (first and fourth channel signals). With the above processing, the broadcast receiving apparatus can record the decrypted fourth TS signal, while continuing the screening of the decrypted first TS signal.

Then, a case will be assumed wherein the aforementioned third state transits to a fourth state. In this fourth state, the broadcast receiving apparatus starts another video recording of a fifth channel of the digital DBS broadcast, while continuing the screening of the first channel of the terrestrial digital broadcast and the video recording of the fourth channel of the digital DBS broadcast. As described above, B-CAS card C1 can be used to simultaneously decrypt two channel signals, and is compatible with the terrestrial digital broadcast and digital DBS broadcast. On the other hand, B-CAS card C2 can be used to simultaneously decrypt two channel signals, but it is compatible with only the terrestrial digital broadcast. That is, B-CAS card C2 cannot be used in decryption of the digital DBS broadcast.

In the aforementioned third state, the broadcast receiving apparatus uses B-CAS card C1 to decrypt the two channel signals (first and fourth channel signals). In the fourth state, the broadcast receiving apparatus has to decrypt two channel signals (fourth and fifth channel signals) of the digital DBS broadcast. Hence, the TS processor 32 switches decryption of the first channel signal using B-CAS card C1 to that using B-CAS card C2, and decrypts the fourth and fifth channel signals using B-CAS card C1.

More specifically, in the fourth state, the terrestrial analog/digital dual-standard tuner 11 continues selection of the first channel signal of the terrestrial digital broadcast, the digital DBS tuner 14 continues selection of the fourth channel signal of the digital DBS broadcast, and the digital DBS tuner 15 selects a fifth channel signal of the digital DBS broadcast. The TS processor 32 continues decryption of the fourth TS signal corresponding to the fourth channel signal using the fourth encryption key obtained from B-CAS card C1. The TS processor 32 aborts decryption of the first TS signal corresponding to the first channel signal using B-CAS card C1, and restarts decryption of the first TS signal using a first encryption key obtained from B-CAS card C2 instead. Furthermore, the TS processor 32 starts decryption of a fifth TS signal corresponding to the fifth channel signal using a fifth encryption key obtained from B-CAS card C1. In this manner, the broadcast receiving apparatus can selectively use B-CAS cards C1 and C2 depending on the situation.

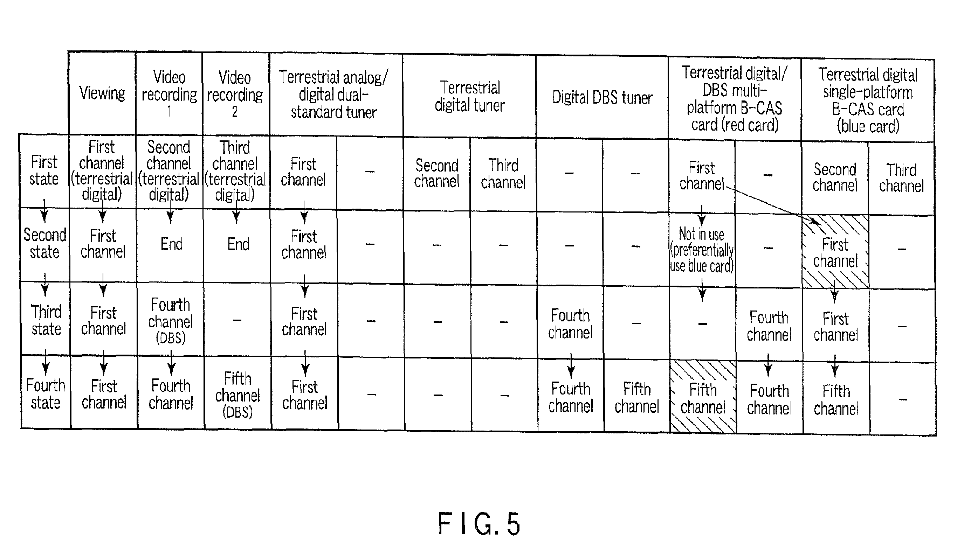

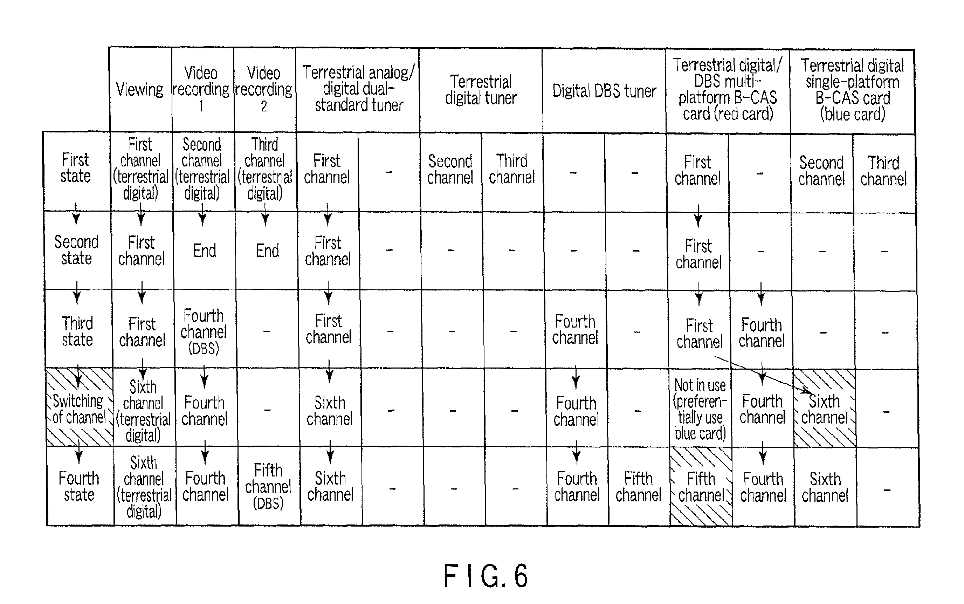

Furthermore, the broadcast receiving apparatus may selectively use B-CAS cards C1 and C2, as shown in FIG. 5 or 6.

For example, in the second state (FIG. 4), the terrestrial digital broadcast (first channel signal) is decrypted using B-CAS card C1, but B-CAS card C2 is not used in decryption. Hence, in the second state (FIG. 5), the TS processor 32 aborts decryption of the first TS signal corresponding to the first channel signal using B-CAS card C1, and restarts that of the first TS signal using the first encryption key obtained from B-CAS card C2 instead. That is, in the case of a channel signal (terrestrial digital broadcast) that can be decrypted by either B-CAS card C1 or C2, the TS processor 32 preferentially uses B-CAS card C2 to decrypt these channel signals. As described above, since the cards assigned to the decryption process are switched in the second state, target screening and video recording processes can be executed smoothly (without any card switching process) in the fourth state.

Alternatively, when viewing of the first channel of the terrestrial digital broadcast is switched to that of a sixth channel of the terrestrial digital broadcast after the third state, as shown in FIG. 6, the cards assigned to the decryption processes may be switched at this timing. That is, in response to switching of the channel, the terrestrial analog/digital dual-standard tuner 11 aborts selection of the first channel signal of the terrestrial digital broadcast, and selects a sixth channel signal of the terrestrial digital broadcast instead. Assume that digital DBS tuner 14 continues selection of the fourth channel signal of the digital DBS broadcast. The TS processor 32 aborts decryption of the first TS signal corresponding to the first channel signal using B-CAS card C1, and starts decryption of a sixth TS signal corresponding to the sixth channel signal using a sixth encryption key obtained from B-CAS card C2 instead. Assume that the TS processor 32 continues decryption of the fourth TS signal corresponding to the fourth channel signal using the fourth encryption key obtained from B-CAS card C1. As described above, by switching the cards assigned to the decryption processes at the channel switching timing, the target screening and video recording processes can be executed smoothly (without any card switching process) in the fourth state.

As described above, the broadcast receiving apparatus according to the second embodiment can selectively use B-CAS cards C1 and C2 depending on the situation. For example, the broadcast receiving apparatus uses B-CAS card C2 in preference to B-CAS card C1 when it decrypts the terrestrial digital broadcast. Preferential use examples are as shown in FIGS. 5 and 6. In this way, the broadcast receiving apparatus can simultaneously decrypt a total of three (or four) channel signals of a maximum of four channel signals corresponding to the terrestrial digital broadcast and a maximum of two channel signals corresponding to the digital DBS broadcast, and can simultaneously screen or record the total of three (or four) channel signals.

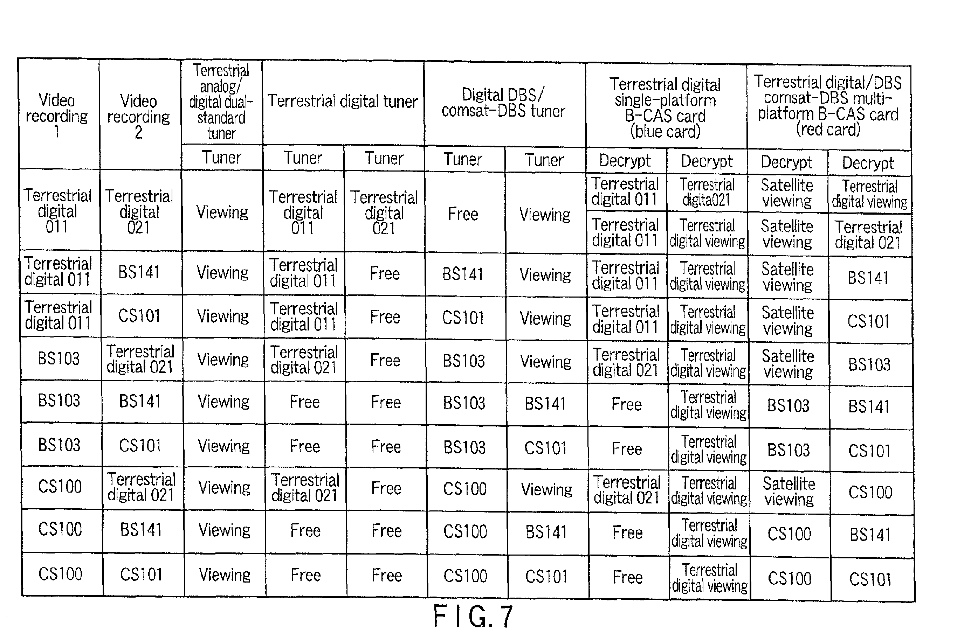

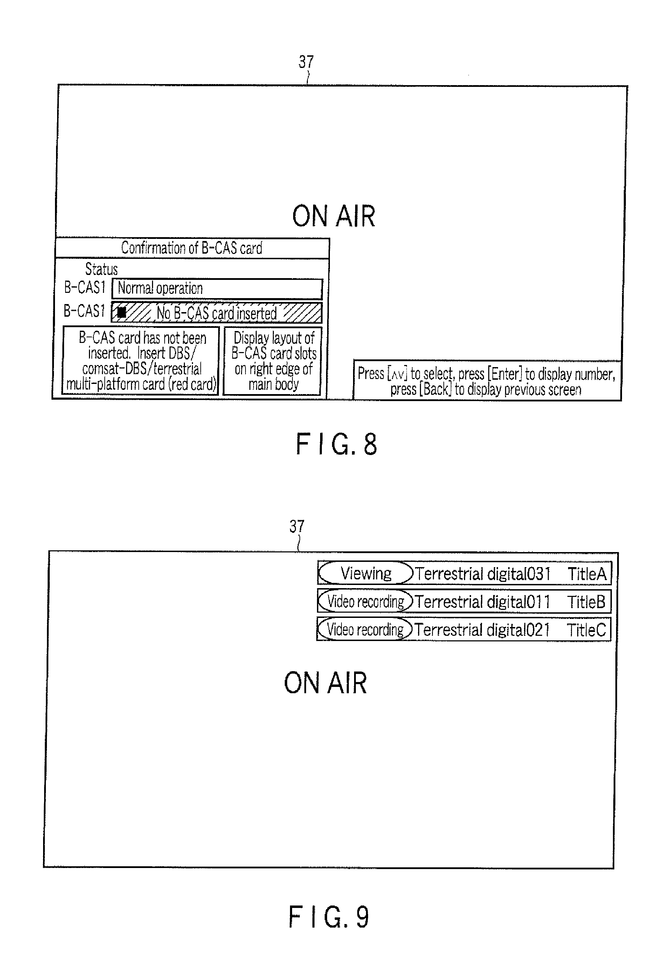

FIG. 7 is a table that summarizes processes for screening two programs and recording two programs by the broadcast receiving apparatus of the second embodiment. Note that digital DBS tuners 14 and 15 of the broadcast receiving apparatus of the second embodiment may be dual-standard tuners capable of receiving signals from purpose-designed DBS transponders on dedicated direct-broadcast satellites and from transponders repurposed for direct broadcasting on communications satellites. In FIGS. 7 and 8, of these two variants of direct broadcasting by satellite, the first variant will be referred to simply as DBS, and the second as comsat-DBS; and in the description below, references to digital DBS tuners 14 and 15 encompass DBS/comsat-DBS dual-standard tuners. Note that FIG. 7 is a table that summarizes the video recording/screening processes of the broadcast receiving apparatus including DBS/comsat-DBS dual-standard tuners. For example, a case will be explained below wherein the broadcast receiving apparatus records channel 011 of the terrestrial digital broadcast, records channel 021 of the terrestrial digital broadcast, and also screens a first designated channel of the terrestrial digital broadcast and a second designated channel of the digital DBS broadcast. In this case, the broadcast receiving apparatus selects a signal of channel 011 using the terrestrial digital tuner 12, a signal of channel 021 using the terrestrial digital tuner 13, a signal of the first designated channel using the terrestrial analog/digital dual-standard tuner 11, and a signal of the second designated channel using digital DBS tuner 14. Then, the broadcast receiving apparatus decrypts the signals of channels 011 and 021 using B-CAS card C2, and decrypts the signals of the first and second designated channels using B-CAS card C1. Alternatively, the broadcast receiving apparatus decrypts the signals of channel 011 and the first designated channel using B-CAS card C2, and decrypts the signals of channel 021 and the second designated channel using B-CAS card C1.

Handling of B-CAS cards C1 and C2 will be described below. In order to allow the broadcast receiving apparatus to screen one channel and to record two channels, as descried above, B-CAS cards C1 and C2 have to be normally inserted into B-CAS card slots 21 and 22. If B-CAS cards C1 and C2 are not normally inserted or wrong cards are inserted, the broadcast receiving apparatus outputs a warning message.

For example, when the broadcast receiving apparatus detects that it can normally communicate with B-CAS card C2 inserted in B-CAS card slot 21, and no B-CAS card is inserted in B-CAS card slot 22, it outputs a warning message (B-CAS1: normally operate/B-CAS2: no B-CAS card C1 [red card] inserted), as shown in FIG. 8. With this message, the user can recognize, e.g., the insertion states of B-CAS cards C1 and C2. Alternatively, when the broadcast receiving apparatus detects that it can normally communicate with B-CAS card C1 inserted in B-CAS card slot 21, and no B-CAS card is inserted into B-CAS card slot 22, it outputs a warning message (B-CAS1: normally operate/B-CAS2: no B-CAS card C2 [blue card] inserted). With this message, the user can recognize, e.g., the insertion states of B-CAS cards C1 and C2.

Furthermore, the broadcast receiving apparatus can output the following warning message depending on the situation.

For example, when B-CAS card slot 21 is assigned as a dedicated slot of B-CAS card C1, and B-CAS card slot 22 is assigned as a dedicated slot of B-CAS card C2, the broadcast receiving apparatus stores this assignment information, and can output warning information that prompts the user to insert B-CAS card C1 in B-CAS card slot 21 when no B-CAS card C1 is inserted in B-CAS card slot 21. Also, the broadcast receiving apparatus can output warning information that prompts the user to insert B-CAS card C2 in B-CAS card slot 22 when no B-CAS card C2 is inserted in B-CAS card slot 22.

Furthermore, the broadcast receiving apparatus can output warning information that prompts the user to insert not B-CAS card C2 but B-CAS card C1 in B-CAS card slot 21 when B-CAS card C2 is inserted in B-CAS card slot 21. Likewise, the broadcast receiving apparatus can output warning information that prompts the user to insert not B-CAS card C1 but B-CAS card C2 in B-CAS card slot 22 when B-CAS card C1 is inserted in B-CAS card slot 22.

Furthermore, when, for example, a read error of information from a card inserted in B-CAS card slot 21 or 22 has occurred, the broadcast receiving apparatus can output warning information indicating, e.g., that the card inserted in B-CAS card slot 21 or 22 has to be exchanged.

Also, when B-CAS card C1 is normally inserted in B-CAS card slot 21 and no B-CAS card C2 is inserted in B-CAS card slot 22, the broadcast receiving apparatus can selectively set a first operation mode that does not accept any video recording/screening operations and a second operation mode that accepts a possible operation. For example, when the second operation mode is set, and when B-CAS card C1 is normally inserted in B-CAS card slot 21 and no B-CAS card C2 is inserted in B-CAS card slot 22, the broadcast receiving apparatus executes only video recording/screening operations using B-CAS card C1 alone, and outputs a guide message when B-CAS card C2 is required.

An example of a display screen during program recording/screening processes will be described below with reference to FIG. 9. For example, an example of the display screen when the broadcast receiving apparatus records channel 011 of the terrestrial digital broadcast, records channel 021 of the terrestrial digital broadcast, and screens channel 031 of the terrestrial digital broadcast will be explained. In this case, the broadcast receiving apparatus outputs first display information required to display screening information (e.g., a viewing icon) indicating screening (viewing) in progress and program information (e.g., a title) of channel 031 of the terrestrial digital broadcast. Also, the broadcast receiving apparatus outputs second display information required to display video recording information (e.g., a video recording icon) indicating video recording in progress and program information (e.g., a title) of channel 011 of the terrestrial digital broadcast. Furthermore, the broadcast receiving apparatus outputs third display information required to display video recording information (e.g., a video recording icon) indicating video recording in progress and program information (e.g., a title) of channel 021 of the terrestrial digital broadcast. As a result, as shown in FIG. 9, the display unit 37 displays the screening information (e.g., a viewing icon) indicating screening (viewing) in progress and the program information of channel 031 of the terrestrial digital broadcast. Also, the display unit 37 displays the video recording information (e.g., a video recording icon) indicating video recording in progress and the program information of channel 011 of the terrestrial digital broadcast. Furthermore, the display unit 37 displays the video recording information (e.g., a video recording icon) indicating video recording in progress and the program information of channel 021 of the terrestrial digital broadcast. With this display, the user can clearly distinctly recognize one program during viewing and two programs during video recording.

## Claims

1. A broadcast receiving apparatus **characterized by** comprising:
a first tuner (11);
a second tuner and a third tuner (12) of a type different from the first tuner;
a first reader (21) configured to read first card information from a first card;
a second reader (22) configured to read second card information from a second card of a type different from the first card; and
a signal processor (32) configured to decrypt a first channel signal selected by the first tuner based on the first card information, and to decrypt a second channel signal and a third channel signal respectively selected by the second tuner and the third tuner based on the second card information.

2. The apparatus of Claim 1, **characterized in that** the signal processor is configured to control to screen a first program corresponding to the decrypted first channel signal, and to control to record a second program and a third program corresponding to the second channel signal and the third channel signal.

3. The apparatus of Claim 1, **characterized by** further comprising:
a fourth tuner (14) of a type different from the first tuner,
**characterized in that** the first tuner, the second tuner, and the third tuner are compatible with a first broadcast, and the fourth tuner is compatible with a second broadcast, and
the signal processor is configured to decrypt one or more channel signals selected by one or more tuners of the first tuner, the second tuner, the third tuner, and the fourth tuner based on at least one card information of the first card information read from the first card which is compatible with the first broadcast and the second broadcast and supports decryption of two channel signals, and the second card information read from the second card which is compatible with the first broadcast and supports decryption of two channel signals.

4. The apparatus of Claim 3, **characterized by** further comprising:
a fifth tuner (15) of a type different from the first tuner,
**characterized in that** the fifth tuner is compatible with the second broadcast, and
the signal processor is configured to decrypt one or more to three or less channel signals selected by one or more to three or less tuners of the first tuner, the second tuner, the third tuner, the fourth tuner, and the fifth tuner based on at least one card information of the first card information and the second card information.

5. The apparatus of Claim 3 or 4, **characterized in that** the signal processor is configured to decrypt, when one or two channels signals which belong to the first broadcast are decrypted based on the first card information, and the second card information is not used in decryption, at least one channel signal of the one or two channel signals, which are decrypted based on the first card information, based on the second card information in place of the first card information.

6. The apparatus of Claim 3 or 4, **characterized in that** the signal processor is configured to decrypt, when one or two channel signals which belong to the first broadcast are decrypted based on the first card information, and one channel signal is decrypted based on the second card information, the one channel signal, which is decrypted based on the first card information, based on the second card information in place of the first card information.

7. The apparatus of Claim 6, **characterized in that** the signal processor is configured to change, when a fifth channel signal selected by the fifth tuner is to be decrypted in a state in which a first channel signal and a fourth channel signal respectively selected by the first tuner and the fourth tuner are decrypted based on the first card information, signals to be decrypted based on the first card information and the second card information, so as to decrypt the fourth channel signal and the fifth channel signal selected by the fourth tuner and the fifth tuner based on the first card information and to decrypt the first channel signal selected by the first tuner based on the second card information.

8. The apparatus of Claim 6, **characterized in that** the signal processor is configured to change, when the first tuner selects a sixth channel signal in place of selecting the first channel signal in a state in which a first channel signal and a fourth channel signal selected by the first tuner and the fourth tuner are decrypted based on the first card information, signals to be decrypted based on the first card information and the second card information, so as to decrypt the fourth channel signal selected by the fourth tuner based on the first card information and to decrypt the sixth channel signal selected by the first tuner based on the second card information.

9. The apparatus of Claim 6, **characterized in that** the signal processor is configured to decrypt, when decryption of a second channel signal selected by the second tuner based on the second card information ends in a state in which a first channel signal selected by the first tuner is decrypted based on the first card information, and a second channel signal and a third channel signal selected by the second tuner and the third tuner are decrypted based on the second card information, the first channel signal and the third channel signal selected by the first tuner and the third tuner based on the second card information in place of decrypting the first channel signal based on the first card information.

10. A broadcast receiving method **characterized by** comprising:
reading first card information from a first card, and reading second card information from a second card of a type different from the first card; and
decrypting a first channel signal selected by a first tuner based on the first card information, and decrypting a second channel signal and a third channel signal respectively selected by a second tuner and a third tuner of a type different from the first tuner based on the second card information.
